# EUROPEAN PATENT APPLICATION

(11) **EP 4 644 884 A1**
(43) Date of publication of application: **05.11.2025**
(21) Application number: 23910484.7
(22) Date of filing: 25.12.2023
(51) Int. Cl.: G01N 23/046

(54) **INSPECTION APPARATUS AND INSPECTION METHOD**

(30) Priority: 28.12.2022 CN 202211696837
(71) Applicant: NUCTECH COMPANY LIMITED, Beijing 100084 (CN); Tsinghua University, Haidian District, Beijing 100084 (CN)
(72) Inventor: CHEN, Zhiqiang, Beijing 100084 (CN); ZHANG, Li, Beijing 100084 (CN); LI, Liang, Beijing 100084 (CN); HONG, Mingzhi, Beijing 100084 (CN); CHANG, Ming, Beijing 100084 (CN); WANG, Zinan, Beijing 100084 (CN)
(74) Representative: Gunzelmann, Rainer
(86) International application number: PCT/CN2023/141522
(87) International publication number: WO 2024/140558

(57) **Abstract**

An inspection device and an inspection system are provided. The inspection device includes a first conveying mechanism (10), a radiographic imaging inspection mechanism (20), a stacking mechanism (30), a second conveying mechanism (40) and a tomographic imaging inspection mechanism (50). The first conveying mechanism (10) is used to convey a battery cell. The radiographic imaging inspection mechanism (20) is used to inspects the battery cell. The stacking mechanism (30) is used to stack battery cells into a battery cell group. The second conveying mechanism (40) is used to convey the battery cell group. The tomographic inspection mechanism (50) is used to inspect the battery cell group.

## Description

This application claims priority to Chinese Patent Application No. 202211696837.5, filed on December 28, 2022, the entire content of which is incorporated herein in its entirety by reference.

### TECHNICAL FIELD

The present disclosure relates to a field of a non-destructive inspection technology, in particular to an inspection device and an inspection method.

### BACKGROUND

With the continuous expansion of requirements for lithium batteries, the market has increasingly high requirements for the quality of lithium batteries. Currently, terminal applications have increasingly strict requirements for the consistency of lithium batteries, especially power batteries. In the existing standards, it is required to perform 100% inspection of the degree of misalignment of electrode plates of a battery cell and impurities in the battery cell using X-ray. In related art, battery cells are placed on an inspection platform one by one by a robotic arm. An X-ray machine and a detector are arranged on the inspection platform. DR inspection device is used to take photos of a pair of corners or a corner of each of the battery cells for inspection.

However, in related art, there are high requirements for various factors such as position, posture and corner deformation of the battery cells to be inspected, and it is impossible to inspect impurities in the battery cells. The inspection effect and the inspection efficiency are difficult to be improved, and the misjudgment rate is too high, which poses a certain risk to the quality and safety of batteries.

### SUMMARY

According to an inspection device of embodiments of a first aspect of the present disclosure, the inspection device includes: a first conveying mechanism, a radiographic imaging inspection mechanism, a stacking mechanism, a second conveying mechanism and a tomographic imaging inspection mechanism. The first conveying mechanism is configured to convey a battery cell. The radiographic imaging inspection mechanism is configured to inspect the battery cell. The stacking mechanism is configured to stack battery cells into a battery cell group. The second conveying mechanism is configured to convey the battery cell group. The tomographic imaging inspection mechanism is configured to inspect the battery cell group.

In some embodiments, the radiographic imaging inspection mechanism includes a first transmitting device and a first receiving device disposed opposite to the first transmitting device.

Optionally, the inspection device includes a plurality of first transmitting devices arranged in an extension direction of the first conveying mechanism.

In some embodiments, the tomographic imaging inspection mechanism includes a second transmitting device and a second receiving device disposed opposite to the second transmitting device. The second transmitting device and the second receiving device are configured to swing around the battery cell group to be inspected.

Furthermore, the second transmitting device and the second receiving device are configured to swing around the battery cell group to be inspected at a swinging angle in a range of 10 degrees to 240 degrees.

In some embodiments, the inspection device further includes an angle adjustment mechanism configured to rotate the battery cell group, so that the battery cell group tilts at a predetermined angle with respect to a conveying direction of the second conveying mechanism. The predetermined angle is in a range of 15 degrees to 75 degrees.

In some embodiments, the inspection device further includes a screening mechanism. The screening mechanism includes a first screening module configured to transfer an unqualified battery cell in the battery cell group to a waste region if the unqualified battery cell is inspected by the tomography imaging inspection mechanism.

Optionally, the screening mechanism further includes a second screening module configured to transfer the unqualified battery cell to the waste region if the unqualified battery cell is inspected by the radiographic imaging inspection mechanism.

According to an inspection method of embodiments of a second aspect of the present disclosure, the inspection method is applicable to the inspection device in any one of the embodiments described above. The inspection method includes: conveying a battery cell by a first conveying mechanism; inspecting the battery cell by a radiographic imaging inspection mechanism; stacking a plurality of battery cells into a battery cell group by a stacking mechanism; conveying the battery cell group by a second conveying mechanism; inspecting the battery cell group by a tomographic imaging inspection mechanism.

In some embodiments, the inspection method further includes: after stacking a plurality of battery cells into a battery cell group by a stacking mechanism, rotating the battery cell group to a predetermined angle by an angle adjustment mechanism. The predetermined angle is in a range of 15 degrees to 75 degrees.

Furthermore, two battery cell groups are simultaneously inspected by the tomographic imaging inspection mechanism. One of the two battery cell groups has a corner close to a corner of the other of the two battery cell groups.

In some embodiments, the inspection method further includes: after inspecting the battery cell group by a tomographic imaging inspection mechanism, determining whether the battery cell is a qualified battery cell or an unqualified battery cell; and transferring the battery cell to the waste region by the first screening module if the battery cell is an unqualified battery cell.

Optionally, the inspection method further includes: after inspecting the battery cell by a radiographic imaging inspection mechanism, determining whether the battery cell is a qualified battery cell or an unqualified battery cell; and transferring the battery cell to the waste region by the second screening module if the battery cell is an unqualified battery cell.

The additional aspects and advantages of the present disclosure will be provided in part in the following description, and in part will be obvious from the following description, or will be learned through the practice of the present disclosure.

### BRIEF DESCRIPTION OF THE DRAWINGS

The above-mentioned and/or additional aspects and advantages of the present disclosure will become apparent and easy to be understood from the following description of embodiments in conjunction with the drawings, in which:
FIG. 1 is a schematic top view of an inspection device of embodiments of a first aspect of the present disclosure.
FIG. 2 is a schematic side view of the inspection device of the embodiments of the first aspect of the present disclosure.
FIG. 3 is a flowchart of an inspection method of embodiments of a second aspect of the present disclosure.
FIG. 4 is a flowchart of an inspection method of a specific embodiment of the second aspect of the present disclosure.

### References numerals:

inspection device 100,
first conveying mechanism 10,
radiographic imaging inspection mechanism 20, first transmitting device 21, first receiving device 22,
stacking mechanism 30,
second conveying mechanism 40,
tomographic imaging inspection mechanism 50, second transmitting device 51, second receiving device 52,
angle adjustment mechanism 60,
first screening module 71, second screening module 72,
battery cell 200,
battery cell group 300.

### DETAILED DESCRIPTION OF EMBODIMENTS

Embodiments of the present disclosure are described in detail below, examples of which are shown in the accompanying drawings, in which the same or similar reference numerals throughout represent the same or similar elements or elements having the same or similar functions. The embodiments described below with reference to the accompanying drawings are exemplary and are only used to explain the present disclosure, and may not be understood as a limitation on the present disclosure.

In the description of the present disclosure, it should be understood that orientations or position relationships indicated by the terms "thickness", "top", "bottom", "front", "back", "left", "right", "vertical", "horizontal", etc. are based on the orientations or position relationships shown in the drawings, and are only for the convenience of describing the present disclosure and simplifying the description, rather than indicating or implying that the device or element referred to must have a specific orientation, or must be constructed and operated in a specific orientation, therefore it may not be understood as a limitation on the present disclosure. In addition, features limited to "first" and "second" may explicitly or implicitly include one or more of these features. In the description of the present disclosure, unless otherwise specified, "plurality of" means two or more.

In the description of the present disclosure, it should be noted that unless otherwise specified and limited, the terms "mounted", "connected" and "connection" should be broadly understood. For example, it may be a fixed connection, a detachable connection, or an integrated connection. It may be a mechanical connection or an electrical connection. It may be directly connected, or indirectly connected through an intermediate medium. It may be an internal connection between two elements. For those of skill in the art, specific meanings of the terms described above in the present disclosure may be understood based on specific circumstances.

The present disclosure provides an inspection device that has low requirements on the position where a battery cell is placed or the posture of the battery cell. The inspection device may inspect the misalignment of the electrode plates of the battery cell as well as the impurities in the battery cell, thereby improving the inspection effect and inspection efficiency of the battery cell, and ensuring higher safety of the battery cell products.

According to an inspection device of embodiments of a first aspect of the present disclosure, battery cell(s) is/are placed on a first conveying mechanism. When being conveyed by the first conveying mechanism, the battery cell may be inspected through X-rays by a radiographic imaging inspection mechanism. The radiographic imaging inspection mechanism may scan the entire or part of the battery cell in the process of inspecting. By using the image(s) obtained through the scanning, impurities in the battery cell and internal defects in the battery cell may be inspected. Battery cells that have been inspected by the radiographic imaging inspection mechanism may be sequentially stacked by a stacking mechanism, so that the battery cells may be formed into group(s) of stacked battery cells. The battery cell group is placed on a second conveying mechanism. When being conveyed by the second conveying mechanism, the battery cell group located on the second conveying mechanism may be scanned by a tomography imaging inspection mechanism. By using the image(s) obtained through the scanning, alignment and welding of electrode plates of each battery cell in the battery cell group may be inspected, and it is possible to achieve simultaneous inspection of defects of a plurality of battery cells in one inspection by the tomography inspection mechanism. Therefore, through inspecting the battery cells by the inspection device, it is possible to improve the inspection effect and the inspection efficiency, and ensure higher safety of the battery cell products.

The present disclosure also intends to provide an inspection method, in which battery cells may be inspected by using the inspection device described above.

According to the inspection method of embodiments of a second aspect of the present disclosure, the battery cells are inspected through the inspection method described above by the above-mentioned inspection device, so that it is possible to improve the inspection effect and the inspection efficiency, and ensure higher safety of the battery cell products.

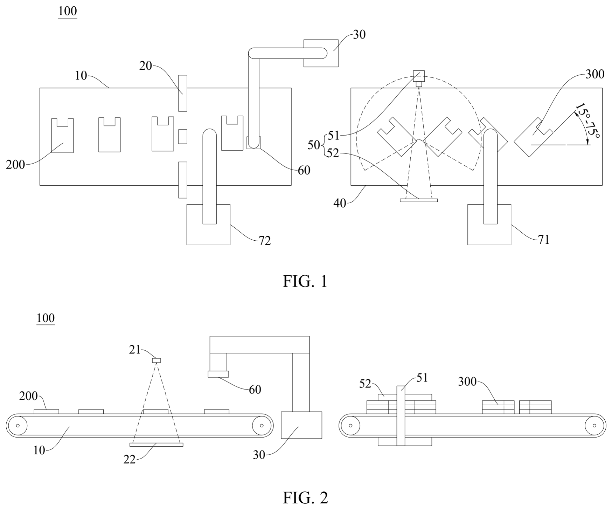

With reference to FIG. 1 to FIG. 2, the inspection device 100 and the inspection method according to the embodiments of the present disclosure are described below.

As shown in FIG. 1, according to the embodiments of the first aspect of the present disclosure, the inspection device 100 includes: a first conveying mechanism 10, a radiographic imaging inspection mechanism 20, a stacking mechanism 30, a second conveying mechanism 40 and a tomographic imaging inspection mechanism 50.

The first conveying mechanism 10 is used to convey a battery cell 200. The radiographic imaging inspection mechanism 20 is used to inspect the battery cell 200. The stacking mechanism 30 is used to stack battery cells 200 into a battery cell group 300. The second conveying mechanism 40 is used to convey the battery cell group 300. The tomographic imaging inspection mechanism 50 is used to inspect the battery cell group 300.

Specifically, the battery cell(s) 200 is(are) placed on the first conveying mechanism 10. When being conveyed by the first conveying mechanism 10, the battery cell 200 may be inspected through X-rays by the radiographic imaging inspection mechanism 20. The radiographic imaging inspection mechanism 20 may scan the entire or part of the battery cell 200 in the process of inspecting. By using the image(s) obtained through the scanning, impurities in the battery cell 200 and internal defects in the battery cell 200 may be inspected. Battery cells 200 that have been inspected by the radiographic imaging inspection mechanism 20 may be sequentially stacked by the stacking mechanism 30, so that the battery cells 200 may be formed into group(s) of stacked battery cells 300. The battery cell group 300 is placed on the second conveying mechanism 40. In a conveying process of the second conveying mechanism 40, the battery cell group 300 located on the second conveying mechanism 40 may be scanned by the tomography imaging inspection mechanism 50. By using the image(s) obtained through the scanning, alignment and welding of electrode plates of each battery cell 200 in the battery cell group 300 may be inspected, and it is possible to achieve simultaneous inspection of defects of the plurality of battery cells 200 in one inspection by the tomography inspection mechanism 50.

It may be understood that the radiographic imaging inspection mechanism 20 may inspect the battery cell 200 through static scanning or continuous motion scanning, which may be selected as desired in practice.

Preferably, it is also possible for the first conveying mechanism 10 to have a first conveying surface 11. When inspecting the battery cell 200 by the radiographic imaging inspection mechanism 20, the battery cell 200 is placed on the first conveying surface 11.

When the radiographic imaging inspection mechanism 20 inspects the battery cell 200 by static scanning, the first conveying mechanism 10 conveys the battery cell 200 and then stops when the battery cell 200 is conveyed to a position corresponding to the radiographic imaging inspection mechanism 20. At this time, the battery cell 200 located on the first conveying surface 11 is in a static state, and the radiographic imaging inspection mechanism 20 begins to inspect the battery cell 200, in which the entire or partial region of the battery cell 200 may be scanned for imaging. Through the inspection result, impurities and internal defects in the battery cell 200 may be inspected, so as to determine whether the battery cell 200 meets the requirements.

When the radiographic imaging inspection mechanism 20 inspects the battery cell 200 by continuous motion scanning, the first conveying mechanism 10 may maintain in an operation state, and the battery cell 200 on the first conveying surface 11 is in a motion state. An image of the entire of the battery cell 200 may be obtained through linear scanning by the radiographic imaging inspection mechanism 20. According to the scanning result, impurities and internal defects of the battery cell 200 may be inspected, so as to determine whether the battery cell 200 meets the requirements.

It may be understood that the radiographic imaging inspection mechanism 20 inspects the battery cell 200 for various defects, such as checking for impurities or foreign bodies in the battery cell 200, checking for wrinkles, folds or damages in the electrode plates of the battery cell 200, and checking for welding defects in the electrode plates of the battery cell 200.

Preferably, it is also possible for the second conveying mechanism 40 to have a second conveying surface 41. When inspecting the battery cell group 300 by the tomography imaging inspection mechanism 50, the battery cell group 300 is placed on the second conveying surface 41.

When scanning the battery cell group 300 by the tomography imaging inspection mechanism 50, the second conveying mechanism 40 conveys the battery cell group 300 and stops when the battery cell group 300 is conveyed to the position corresponding to the tomographic imaging inspection mechanism 50. At this time, the battery cell group 300 located on the second conveying surface 41 is in a static state. The tomographic imaging inspection mechanism 50 rotates around the periphery of the battery cell group 300. The surface in which the tomographic imaging inspection mechanism 50 moves is a horizontal plane parallel to the second conveying surface 41. The scanning result of the tomographic imaging inspection mechanism 50 is an image of a side of the battery cell group 300. After completing the scanning by the tomographic imaging inspection mechanism 50, alignment of the electrode plates may be inspected according to the inspection result, so as to determine whether the battery cell 200 meets the requirements.

It may be understood that the tomographic imaging inspection mechanism 50 inspects the battery cell group 300 for various defects, such as checking for the alignment of the electrode plates in the battery cell 200, checking for folds or missing of the electrode plates, checking for compression between the electrode groups, and checking for welding defects in the electrode plates.

Moreover, the inspection efficiency and inspection accuracy of the radiographic imaging inspection mechanism 20 are not the same as the inspection efficiency and inspection accuracy of the tomography imaging inspection mechanism 50. The radiographic imaging inspection mechanism 20 has higher inspection efficiency, lower inspection accuracy, and a better inspection effect for impurities, foreign objects and other defects in the battery cell 200. On the contrary, the tomography imaging inspection mechanism 50 has lower inspection efficiency, higher inspection accuracy, and better inspection effect for defects, especially in checking for the alignment of the electrode plates in the battery cell 200, checking for folds in the electrode plates or checking for missing of the electrode plates. Therefore, in the present disclosure, the radiographic imaging inspection mechanism 20 is used in combination with the tomographic imaging inspection mechanism 50, so as to improve the inspection accuracy while improving the inspection efficiency.

When inspecting by the inspection device 100, the radiographic imaging inspection mechanism 20 first inspects the battery cells 200. After completing the inspection, the battery cells 200 are stacked into a battery cell group 300 by the stacking mechanism 30. Then, the battery cell group 300 is inspected by the tomography imaging inspection mechanism 50. Through reasonable configuration, the inspection efficiency of the tomography imaging inspection mechanism 50 on the battery cell group 300 may be matched with the inspection efficiency of the radiographic imaging inspection mechanism 20 on the battery cells 200, so as to ensure the sustainable operation of the inspection device 100, thereby improving the inspection efficiency of the inspection device 100.

It should be noted that the present disclosure also provides an inspection system for the inspection device 100. The inspection system may determine the inspection result of the battery cell 200 according to the inspection data of the inspection device 100. For example, defect threshold(s) is/are predetermined in the inspection system. When inspecting the battery cell 200 by the radiographic imaging inspection mechanism 20 or by the tomography imaging inspection mechanism 50, the amount of impurities and the degree of defects in the battery cell 200 may be determined according to the imaging result. Through comparing them with the defect threshold(s), it may be determined whether the inspected battery cell 200 meets the requirements. If the inspected battery cell 200 meets the requirements, the next manufacturing process may be performed.

The inspection system may also number the battery cells 200 inspected by the radiographic imaging inspection mechanism 20 and the battery cells 200 in the battery cell group 300 inspected by the tomography imaging inspection mechanism 50, and bind the same battery cells 200, so as to facilitate subsequent operations for the battery cells 200.

According to the embodiments of the first aspect of the present disclosure, through inspecting the battery cells 200 by the inspection device 100, it is possible to improve the inspection effect and the inspection efficiency, and ensure higher safety of the battery cell 200 products.

As shown in FIG. 2, in some embodiments, the radiographic imaging inspection mechanism 20 includes a first transmitting device 21 and a first receiving device 22 disposed opposite to the first transmitting device 21.

Specifically, the radiographic imaging inspection mechanism 20 may achieve the inspection of the battery cell 200 by using the first transmitting device 21 and the first receiving device 22. The first transmitting device 21 may emit X-rays. The X-rays are received and processed by the first receiving device 22, so that the received signals may be converted into an image, so as to facilitate determining internal defects in the battery cell 200. The first transmitting device 21 and the first receiving device 22 are respectively disposed on upper and lower sides of the first conveying surface 11 in vertical direction. That is to say, an image of the top or bottom of the battery cell 200 may be formed by the radiographic imaging inspection mechanism 20. Through the penetration effect of X-rays, the internal defects of the entire or part of the battery cell 200 may be inspected.

Therefore, through inspecting the battery cell 200 by the radiographic imaging inspection mechanism 20, the inspection efficiency and the inspection quality of the battery cell 200 may be improved, and the safety of the battery cell 200 may be increased.

In some specific embodiments, the first transmitting device 21 is an X-ray machine, and the first receiving device 22 is a DR device.

Optionally, the inspection device includes a plurality of first transmitting devices 21 arranged in an extension direction of the first conveying mechanism 10.

Specifically, the plurality of first transmitting devices 21 are disposed in the extension direction of the first conveying mechanism 10. Through receiving signals by the first receiving device 22, the inspection range of the radiographic imaging inspection mechanism 20 may be increased, so that the radiographic imaging inspection mechanism 20 may simultaneously inspect the plurality of battery cells 200, thereby improving the inspection efficiency.

In some specific embodiments, a plurality of first receiving devices 22 may be linear array detectors or TDI detectors. In this case, the scanning manner of the first receiving device 22 is linear scanning. When inspecting the battery cell 200, the battery cell 200 driven by the first conveying mechanism 10 is in a motion state , and the scanning of the battery cell 200 is achieved while the battery cell 20 is conveyed, so as to determine the internal defects in the battery cell 200.

Therefore, while inspecting the battery cell 200 by the radiographic imaging inspection mechanism 20, the battery cell 200 on the first conveying mechanism 10 may be maintained in a motion state, thereby improving the inspection efficiency of the inspection device 100.

As shown in FIG. 1 to FIG. 2, in some embodiments, the tomographic imaging inspection mechanism 50 includes a second transmitting device 51 and a second receiving device 52 disposed opposite to the second transmitting device 51. The second transmitting device 51 and the second receiving device 52 may swing around the battery cell group 300 to be inspected.

Specifically, the tomography imaging inspection mechanism 50 may inspect the battery cell 200 by using the second transmitting device 51 and the second receiving device 52. The second transmitting device 51 and the second receiving device 52 may swing around the second conveying surface 41. That is to say, after stacking the plurality of battery cells 200 into a battery cell group 300 by the stacking mechanism 30, the battery cells 200 may be inspected by the tomography imaging inspection mechanism 50 in a thickness direction of the battery cell group 300. According to the inspection result, defects between the electrode plates in the battery cell 200 may be inspected. When the second transmitting device 51 and the second receiving device 52 rotate in a plane parallel to the second conveying surface 41, the second transmitting device 51 and the second receiving device 52 may rotate clockwise and counterclockwise by an angle within a certain range, so as to simultaneously scan a plurality of battery cell groups 300, thereby increasing the inspection efficiency.

Therefore, through inspecting the thickness direction of the battery cell 200 by the tomography inspection mechanism 50, it is possible to improve the both the efficiency and the quality of inspecting the battery cell 200, and increase the safety of the battery cell 200.

Furthermore, the second transmitting device 51 and the second receiving device 52 are implemented to swing around the battery cell group 300 to be inspected at a swinging angle in a range of 10 degrees to 240 degrees. Therefore, when the second transmitting device 51 and the second receiving device 52 swing at the swinging angle, a precise inspection of the battery cell 200 may be achieved while improving the inspection efficiency.

For example, the swinging angle may be 10 degrees, 20 degrees, 30 degrees, 40 degrees, 50 degrees, 60 degrees, 70 degrees, 80 degrees, 90 degrees, 100 degrees, 110 degrees, 120 degrees, 130 degrees, 140 degrees, 150 degrees, 160 degrees, 170 degrees, 180 degrees, 190 degrees, 200 degrees, 210 degrees, 220 degrees, 230 degrees, or 240 degrees, which may be selected according to the dimension of the battery cell 200 and the requirements of the inspection accuracy.

As shown in FIG. 1 to FIG. 2, in some embodiments, the inspection device 100 also includes an angle adjustment mechanism 60 applicable to rotate the battery cell group 300, so that the battery cell group 300 tilts at a predetermined angle with respect to an extension direction of the second conveying surface 41. The predetermined angle is in a range of 15 degrees to 75 degrees.

Specifically, the battery cells 200 or the battery cell group 300 may be adjusted to a predetermined angle by the angle adjustment mechanism 60. In this way, the battery cell 200 tilts with respect to the first conveying mechanism 10 or the battery cell group 300 tilts with respect to the second conveying mechanism 40, so that for two battery cells 200 or battery cell groups 300, one has a corner close to a corner of the other one. The tomography imaging inspection mechanism 50 is disposed on periphery of the second conveying surface 41 and mainly inspects the thickness direction of the battery cells 200 or the battery cell group 300. By adjusting the battery cells 200 or the battery cell group 300 to the predetermined angle, the tomography imaging inspection mechanism 50 may determine whether the battery cells 200 have internal defects by inspecting one corner of the battery cell group 300, and the tomography imaging inspection mechanism 50 may detect internal defects for two battery cells 200 or two battery cell groups 300 simultaneously.

Therefore, it is possible to improve the inspection efficiency of the inspection device 100 while improving the inspection effect of the inspection device 100.

For example, the predetermined angle may be 15 degrees, 20 degrees, 25 degrees, 30 degrees, 35 degrees, 40 degrees, 45 degrees, 50 degrees, 55 degrees, 60 degrees, 65 degrees, 70 degrees, or 75 degrees, which may be set as desired in practice.

It should be noted that there is no specific limitation on the position where the angle adjustment mechanism 60 is disposed. The angle adjustment mechanism 60 may be disposed on the periphery of the first conveying mechanism 10 or the second conveying mechanism 40, or may be combined with the stacking mechanism 30.

In a case that the angle adjustment mechanism 60 is disposed on the periphery of the first conveying mechanism 10, the first conveying mechanism 10 conveys the battery cells 200 that have been inspected by the radiographic imaging inspection mechanism 20 to a position corresponding to the angle adjustment mechanism 60. The angles of the battery cells 200 are adjusted according to the predetermined angle by the angle adjustment mechanism 60, and then the battery cells 200 are stacked onto the second conveying surface 41 of the second conveying mechanism 40 by the stacking mechanism 30. The battery cell 200, when being transferred by the stacking mechanism 30, maintains at the predetermined angle. In this way, after stacking the battery cells 200 onto the second conveying surface 41, the battery cells 200 may maintain at the predetermined angle, in order to inspect the battery cell group 300 by the tomography imaging inspection mechanism 50.

In a case that the angle adjustment mechanism 60 is disposed on the periphery of the second conveying mechanism 40, after transferring the battery cells 200 onto the second conveying surface 41 and stacking the battery cells 200 into battery cell group(s) 300 by the stacking mechanism 30, the angle of the battery cell group(s) 300 may be adjusted according to the predetermined angle, and the battery cell group(s) 300 may be inspected by the tomography imaging inspection mechanism 50.

In a case that the angle adjustment mechanism 60 is combined with the stacking mechanism 30, the angle adjustment mechanism 60 may be integrated on the stacking mechanism 30. After completing the inspection of the battery cells 200 by the radiographic imaging inspection mechanism 20, the battery cells 200 are stacked to the second conveying mechanism 40 by the stacking mechanism 30. While transferring the battery cells 200 to the second conveying mechanism 40 by the stacking mechanism 30, the angle adjustment mechanism 60 may rotate the battery cells 200, so that the battery cells 200 are stacked to the second conveying mechanism 40 at the predetermined angle, in order to inspect the battery cell group 300 by the tomography imaging inspection mechanism 50, thereby improving the inspection efficiency of the inspection device 100.

As shown in FIG. 1, in some embodiments, the inspection device 100 further includes a screening mechanism. The screening mechanism includes a first screening module 71 used to transfer an unqualified battery cell 200 in the battery cell group 300 to a waste region if the unqualified battery cell 200 is inspected by the tomography imaging inspection mechanism 50. After completing the inspection of the battery cell group 300 by the tomography imaging inspection mechanism 50, the first screening module 71 may screen out the unqualified battery cell 200 in the battery cell group 300 and transfer the unqualified battery cell 200 to the waste region if the internal defects of the battery cell 200 in the battery cell group 300 do not meet the requirements, so that the qualified battery cells 200 may enter the next process. Therefore, the inspection efficiency of the inspection device 100 may be improved.

Optionally, the screening mechanism also includes a second screening module 72 used to transfer the unqualified battery cell 200 to the waste region if the unqualified battery cell 200 is inspected by the radiographic imaging inspection mechanism 20. The second screening module 72 is disposed on periphery of the radiographic imaging inspection mechanism 20. After completing the inspection of the battery cell 200 by the radiographic imaging inspection mechanism 20, the unqualified battery cell 200 may be transferred to the waste region by the second screening module 72 if the internal defects of the battery cell 200 do not meet the requirements. Then the qualified battery cells 200 may be stacked onto the second conveying mechanism 40 by the stacking mechanism 30. Therefore, it is possible to reduce the number of inspections performed by the tomographic imaging inspection mechanism 50, thereby improving the inspection efficiency of the inspection device 100.

It may be understood that in the present disclosure, the inspection system corresponding to the inspection device 100 may number the battery cells 200 inspected by the radiographic imaging inspection mechanism 20 and the battery cells 200 inspected by the tomography imaging inspection mechanism 50 in one-to-one correspondence. If the unqualified battery cell 200 is transferred to the waste region by the second screening module 72 or transferred to the waste region by the first screening module 71, the number of the unqualified battery cell 200 and the image of the unqualified battery cell 200 are removed by the inspection system.

That is to say, the battery cell 200 conveyed by the first conveying mechanism 10 is inspected by the radiographic imaging inspection mechanism 20. If the radiographic imaging inspection mechanism 20 inspects that the battery cell 200 is an unqualified battery cell, the battery cell 200 may be transferred to the waste region by the second screening module 72, and the number and image corresponding to the unqualified battery cell 200 are removed in the inspection system. If the battery cell 200 passes the inspection of the radiographic imaging inspection mechanism 20 and is determined to be a qualified battery cell, the battery cell 200 is transferred to the second conveying mechanism 40 by the stacking mechanism 30. A plurality of battery cells 200 are stacked by the stacking mechanism 30. After inspecting the battery cells 200 by the tomography imaging inspection mechanism 50, if an unqualified battery cell 200 is inspected, this battery cell 200 is transferred to the waste region by the first screening mechanism 71, and the number corresponding to the unqualified battery cell 200, the image of the unqualified battery cell 200 obtained by the radiographic imaging inspection mechanism 20 and the image of the unqualified battery cell 200 obtained by the tomographic imaging inspection mechanism 50 are removed. Therefore, the system resource utilization rate may be reduced, thereby allowing the inspection device 100 to have higher inspection efficiency.

It should be noted that there is no specific limitation on the amount and location of waste region here. A waste region may be disposed on the periphery of each of the first screening module 71 and the second screening module 72. Alternatively, one waste region may be disposed and a third conveying mechanism may be disposed in the inspection device 100. Through the third conveying mechanism, the unqualified battery cells 200 may be uniformly transferred to the waste region(s), which may be set as desired in practice.

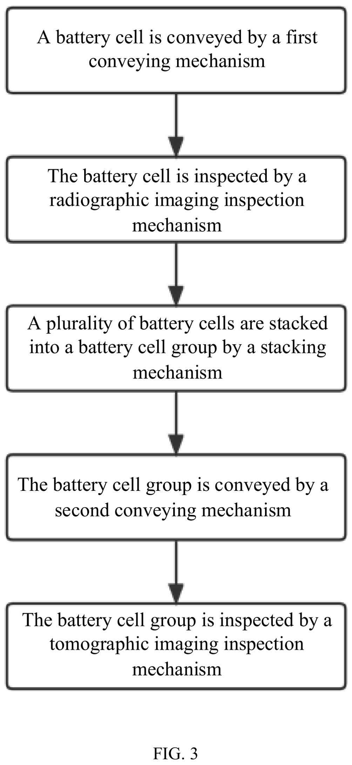

As shown in FIG. 3, according to an inspection method of embodiments of a second aspect of the present disclosure, the inspection method is applicable to the inspection device 100 in any one of embodiments. The inspection method includes: conveying a battery cell 200 by a first conveying mechanism 10; inspecting the battery cell 200 by a radiographic imaging inspection mechanism 20; stacking a plurality of battery cells 200 into a battery cell group 300 by a stacking mechanism 30; conveying the battery cell group 300 by a second conveying mechanism 40; and inspecting the battery cell group 300 by a tomographic imaging inspection mechanism 50.

According to the inspection method of the embodiments of the second aspect of the present disclosure, the battery cells 200 are inspected by the inspection device 100 through the inspection method described above, so that it is possible to improve the inspection effect and the inspection efficiency, and ensure higher safety of the battery cell 200 products.

In some embodiments, after stacking a plurality of battery cells 200 into a battery cell group 300 by a stacking mechanism 30, the battery cell group 300 is rotated to a predetermined angle by an angle adjustment mechanism 60. The predetermined angle is in a range of 15 degrees to 75 degrees.

Furthermore, two battery cell groups 300 may be simultaneously inspected by the tomographic imaging inspection mechanism 50. One of the two battery cell groups 300 has a corner close to a corner of the other of the two battery cell groups 300.

In some embodiments, after inspecting the battery cell group 300 by a tomography imaging inspection mechanism 50, it is determined whether the battery cell 200 is a qualified battery cell or an unqualified battery cell. If the battery cell 200 is an unqualified battery cell, the battery cell 200 is transferred to the waste region by the first screening module 71.

Optionally, after inspecting the battery cell 200 by a radiographic imaging inspection mechanism 20, it is determined whether the battery cell 200 is a qualified battery cell or an unqualified battery cell. If the battery cell 200 is an unqualified battery cell, the battery cell 200 is transferred to the waste region by the second screening module 72.

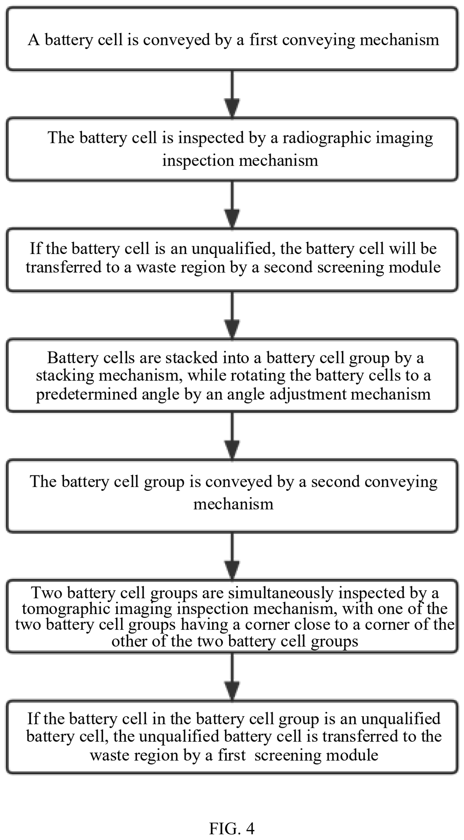

As shown in FIG. 4, the inspection method of the inspection device 100 will be described in detail according to the specific embodiments of the present disclosure.

A battery cell 200 is conveyed by a first conveying mechanism 10.

The battery cell 200 is inspected by a radiographic imaging inspection mechanism 20.

If the battery cell 200 is an unqualified cell, the battery cell 200 will be transferred to a waste region by a second screening module 72.

A plurality of battery cells 200 are stacked into a battery cell group 300 by a stacking mechanism 30, while rotating the battery cells 200 to a predetermined angle by an angle adjustment mechanism 60, so that the battery cells 200 stacked into the battery cell group 300 are at a predetermined angle. The predetermined angle is 45 degrees.

The battery cell group 300 is conveyed by a second conveying mechanism 40.

Two battery cell groups 300 are simultaneously inspected by a tomographic imaging inspection mechanism 50, and one of the two battery cell groups 300 has a corner close to a corner of the other of the two battery cell groups 300.

If the battery cell 200 in the battery cell group 300 is an unqualified battery cell, the unqualified battery cell 200 will be transferred to the waste region by a first screening module 71.

In the description of the specification, the reference terms "embodiment", "example", etc. refer to specific features, structures, materials, or characteristics described in conjunction with the embodiment or example, which are included in at least one embodiment or example of the present disclosure. In the specification, the illustrative expressions of the above terms may not necessarily refer to the same embodiments or examples. Moreover, the specific features, structures, materials, or characteristics described may be combined in an appropriate manner in any one or more embodiments or examples.

Although the embodiments of the present disclosure have been shown and described, those of skill in the art may understand that various changes, modifications, substitutions and variations may be made to these embodiments without departing from the principles and purposes of the present disclosure, and the scope of the present disclosure is limited by the claims and their equivalents.

## Claims

1. An inspection device, comprising:
a first conveying mechanism (10) configured to convey a battery cell (200);
a radiographic imaging inspection mechanism (20) configured to inspect the battery cell (200);
a stacking mechanism (30) configured to stack battery cells (200) into a battery cell group (300);
a second conveying mechanism (40) configured to convey the battery cell group (300);
a tomographic imaging inspection mechanism (50) configured to inspect the battery cell group (300).

2. The inspection device of claim 1, wherein the radiographic imaging inspection mechanism (20) comprises a first transmitting device (21) and a first receiving device (22) disposed opposite to the first transmitting device (21).

3. The inspection device of claim 2, wherein the inspection device comprises a plurality of first transmitting devices (21) arranged in an extension direction of the first conveying mechanism (10).

4. The inspection device of claim 1, wherein the tomographic imaging inspection mechanism (50) comprises a second transmitting device (51) and a second receiving device (52) disposed opposite to the second transmitting device (51), and the second transmitting device (51) and the second receiving device (52) are configured to swing around the battery cell group to be inspected.

5. The inspection device of claim 4, wherein the second transmitting device (51) and the second receiving device (52) are configured to swing around the battery cell group to be inspected at a swinging angle in a range of 10 degrees to 240 degrees.

6. The inspection device of claim 1, further comprising an angle adjustment mechanism (60) configured to rotate the battery cell group (300), so that the battery cell group (300) tilts at a predetermined angle with respect to a conveying direction of the second conveying mechanism (40);
wherein the predetermined angle is in a range of 15 degrees to 75 degrees.

7. The inspection device of claim 1, further comprising a screening mechanism, wherein the screening mechanism comprises a first screening module (71) configured to transfer an unqualified battery cell (200) in the battery cell group (300) to a waste region if the unqualified battery cell (200) is inspected by the tomography imaging inspection mechanism (50).

8. The inspection device of claim 7, wherein the screening mechanism further comprises a second screening module (72) configured to transfer the unqualified battery cell (200) to the waste region if the unqualified battery cell (200) is inspected by the radiographic imaging inspection mechanism (20).

9. An inspection method applicable to an inspection device of any one of claims 1 to 8, the inspection method comprising:
conveying a battery cell (200) by a first conveying mechanism (10);
inspecting the battery cell (200) by a radiographic imaging inspection mechanism (20);
stacking a plurality of battery cells (200) into a battery cell group (300) by a stacking mechanism (30);
conveying the battery cell group (300) by a second conveying mechanism (40);
inspecting the battery cell group (300) by a tomographic imaging inspection mechanism (50).

10. The inspection method of claim 9, further comprising: after stacking a plurality of battery cells (200) into a battery cell group (300) by a stacking mechanism (30),
rotating the battery cell group (300) to a predetermined angle by an angle adjustment mechanism (60), wherein the predetermined angle is in a range of 15 degrees to 75 degrees.

11. The inspection method of claim 10, wherein two battery cell groups (300) are simultaneously inspected by the tomographic imaging inspection mechanism (50), wherein one of the two battery cell groups (300) has a corner close to a corner of the other of the two battery cell groups (300).

12. The inspection method of claim 9, further comprising: after inspecting the battery cell group (300) by a tomographic imaging inspection mechanism (50),
determining whether the battery cell (200) is a qualified battery cell or an unqualified battery cell; and
transferring the battery cell (200) to the waste region by the first screening module (71) if the battery cell (200) is an unqualified battery cell.

13. The inspection method of claim 12, further comprising: after inspecting the battery cell (200) by a radiographic imaging inspection mechanism (20),
determining whether the battery cell (200) is a qualified battery cell or an unqualified battery cell; and
transferring the battery cell (200) to the waste region by the second screening module (72) if the battery cell (200) is an unqualified battery cell.
